# EUROPÄISCHE PATENTSCHRIFT

(11) **EP 2 612 406 B1**
(45) Veröffentlichungstag und Bekanntmachung des Hinweises auf die Patenterteilung: **29.10.2014**
(21) Anmeldenummer: 11749349.4
(22) Anmeldetag: 26.08.2011
(51) Int. Cl.: H02B 1/01

(54) **RAHMENSCHENKEL FÜR EIN GESTELL**
FRAME PIECE FOR A RACK
MONTANT DE CADRE POUR UN BÂTI

(30) Priorität: 30.08.2010 DE 102010035792
(43) Veröffentlichungstag der Anmeldung: 10.07.2013
(73) Patentinhaber: C E S Control Enclosure Systems GmbH, 61348 Bad Homburg v. d. Höhe (DE)
(72) Erfinder: HOFMANN, Wilfried, 80801 München (DE); JOCHAM, Simon, 80469 München (DE); SCHAAF, Igor, Harry, 77836 Rheinmünster (DE); MAZURA, Paul, 76307 Karlsbad (DE); HELLWIG, Manfred, 61350 Bad Homburg v. d. Höhe (DE); NICOLAI, Walter, 35418 Buseck (DE)
(74) Vertreter: Beyer, Andreas
(86) Internationale Anmeldenummer: PCT/EP2011/004287
(87) Internationale Veröffentlichungsnummer: WO 2012/031696

(56) Entgegenhaltungen:
- EP-A1- 1 094 695
- DE-C1- 3 344 598
- DE-C1- 19 845 169

## Beschreibung

Die vorliegende Erfindung betrifft einen Rahmenschenkel für ein Gestell, insbesondere für ein Gestell, das einen Rahmen für einen Schaltschrank bildet, wobei der Rahmenschenkel ein Hohlprofil, das sich entlang seiner Längsachse erstreckt und durch Umformen eines im Wesentlichen flachen Ausgangsmaterials in eine zylinderförmige Profilform gebracht wird, und das Hohlprofil an zwei gegenüberliegenden Seitenkanten einen Verbindungsbereich zum Schließen des Hohlprofils aufweist. Mit dem Begriff "Gestell" sind hier stützende Strukturen gemeint, wie sie beispielsweise im Möbel- und insbesondere Regalbau zum Einsatz kommen, aber auch sonstige Stützstrukturen, etwa Maschinenuntergestelle, Stützrahmen für Umhausungen etc.

Die bereits erwähnten Schaltschränke dienen im Allgemeinen dazu, elektrische und elektronische Komponenten einer verfahrenstechnischen Anlage, einer Werkzeugmaschine oder einer Fertigungseinrichtung etc. zu beherbergen, die sich nicht unmittelbar in oder an der Maschine (z. B. Sensoren) befinden. Je nach Art der einzubauenden Komponenten werden unterschiedliche Anforderungen an den Schaltschrank gestellt. So kann hinsichtlich der im Innenraum einzubauenden Komponenten gefordert sein, dass der Schaltschrank diese vor Staub und Wasser (Schutzart, IP-Schutzklassen nach DIN EN 60529), vor Überhitzung (Schaltschrankklimatisierung), vor elektromagnetischer Beeinflussung (EMV) und/oder vor mechanischen Einflüssen, Vandalismus und Erdbeben (Schränke mit zusätzlichen Streben) schützt. Weiterhin kann ein Schaltschrank zur Halterung und Strukturierung des Innenaufbaus (z.B. mit Hilfe von Tragschienen oder Montageplatten zur Unterteilung in Leistungs- und Steuerungsbereiche) dienen.

Zudem ermöglicht der Schaltschrank jedoch auch einen Schutz für die äußere Umgebung, indem er beispielsweise eine Abschirmung elektromagnetischer Emissionen der eingebauten Komponenten, Schutz gegen gefährliche Spannungen (Schutzklassen: Schutzerdung oder Schutzisolation) und/oder gegebenenfalls einen Brandschutz (Speziallösungen für Entrauchungsanlagen) bietet.

Üblicherweise setzten sich Schaltschränke grundsätzlich aus einem Rahmengestell und daran anbringbaren Wand- und Türelementen zusammen. Je nach dem gewünschten Einsatz und den daraus resultierenden Anforderungen an den Schaltschrank können das Rahmengestell und die daran anbringbaren Elemente aus unterschiedlichen Materialien und/oder mit unterschiedlichen Beschichtungen hergestellt sein. Für das Rahmengestell werden regelmäßig Hohlprofile verwendet.

Die Längsachse eines Hohlprofils kann hierbei die Mittellängsachse des Hohlprofils sein, die mit der Mittellängsachse des Rahmenschenkels zusammenfällt, oder jede hierzu parallel verlaufende Längsachse umfassen.

Derartige Hohlprofile sind aus dem Stand der Technik wohlbekannt. So offenbart beispielsweise das Dokument DE 195 36 904 C1 einen Schaltschrank mit einem Rahmengestell, dessen Rahmenschenkel in ihrem Verbindungsbereich mittels einer in Längsrichtung des Hohlprofils verlaufenden Schweißnaht zu einem geschlossenen Profil zusammengefügt sind.

Das Vorsehen einer Schweißnaht zur Ausbildung des umgeformten Ausgangsmaterials in ein geschlossenes Hohlprofil kann jedoch aus mehreren Gründen nachteilig sein. So ist bekannt, dass beim Verschweißen ein Stoffschluss zwischen den zu verbindenden Teilen dadurch erreicht wird, dass das Material der zu verbindenden Teile durch lokale Wärmeeinbringung stark erhitzt wird, um dieses im Bereich der Schweißnaht zum Schmelzen zu bringen. Hieraus können sich jedoch ein thermischer Verzug durch eingebrachte Wärmespannungen und eine Gefügeveränderung des Materialgefüges im Bereich der Schweißnaht ergeben. Im Falle eines Hohlprofils eines Rahmenschenkels hat dies u.a. zu Folge, dass gegebenenfalls zusätzliche Nachbearbeitungsschritte erforderlich sind, um das Hohlprofil wieder auszurichten und in die gewünschte Form zu bringen.

Ein weiterer Nachteil des Schweißens als Fügeverfahren zum Schließen eines Hohlprofils besteht in seinem Einfluss auf Oberflächenbeschichtungen, die auf dem Material des Hohlprofils aufgebracht sein können. Oberflächenbeschichtungen können eingesetzt werden, um die elektrische Leitfähigkeit der Bauteile des Schaltschranks verbessern, beispielsweise bei einer gewünschten Nutzung des Schaltschrank zur Abschirmung elektromagnetischer Emissionen der eingebauten Komponenten nach außen und zum Schutz der eingebauten Komponenten vor elektromagnetischer Beeinflussung (EMV), oder zur Vermeidung von Korrosion (z.B. nichtmetallische Beschichtungen aus Kunststoff oder metallische Beschichtung mit Zink). Besonders günstig wird das flache, plattenförmige Ausgangsmaterial der Hohlprofile mit einer Beschichtung versehen, da deren Auftrag durch die flache Form des Ausgangsmaterials vereinfacht wird, oder das Ausgangsmaterial wird als bereits beschichtetes Material zugekauft.

Durch den Schweißprozess zum Schließen des Hohlprofils wird jedoch im Bereich der Schweißnaht ein Abbrand erzeugt, der die Beschichtung des Hohlprofils lokal zerstört und somit die gewünschte elektrische Leitfähigkeit und/oder die Korrosionsbeständigkeit des Rahmenschenkels beeinträchtigen kann. Weiterhin können manche Beschichtungen den Schweißprozess nachteilig beeinflussen, so dass auf eine Beschichtung der zu verbindenden Bauteile vor dem Schweißprozess verzichtet werden muss. Somit führt das Schweißen der Hohlprofile zu einem erhöhten Kosten- und Zeitaufwand, wenn die geschweißten Hohlprofile nachträglich mit einer entsprechenden Beschichtung versehen werden müssen.

Nicht zuletzt sind als Nachteile des Schweißens zum Schließen der Hohlprofile der hohe Energiebedarf und die kostenintensiven Arbeitsschutzmaßnahmen für das Schweißpersonal zu nennen.

Alternativ ist es aus dem Stand der Technik bekannt, anstelle eines geschlossenen geschweißten Hohlprofils für einen Rahmenschenkel offene Hohlprofile bereitzustellen, wie beispielsweise in dem Dokument DE 43 36 204 C2 offenbart. Bei der darin gezeigten Lösung werden die Rahmenschenkel des Traggestells als einfache Biegeteile aus einem Blechzuschnitt gebogen und bilden ein nach innen gerichtetes, offenes Hohlprofil, dessen Profilseitenabschnitte als Aufnahme für Montageschienen dienen. Die offenen Hohlprofile, die aufgrund ihrer Gestaltung als offenes Hohlprofil eine geringere Steifigkeit und Biegefestigkeit aufweisen als geschlossene Hohlprofile, werden durch die mit ihnen verbundenen Montageschienen stabilisiert. Aus dem Dokument DE 43 36 204 C2 geht auch hervor, dass die Montageschienen an den Hohlprofilen angeschweißt werden können. Alternativ ist eine Verbindung durch Schrauben oder Nieten möglich.

Auch das Dokument DE 43 36 187 C2 offenbart die Möglichkeit, Rahmenschenkel für ein Rahmengestell eines Schaltschrankes als offene Hohlprofile auszubilden, die wiederum mit entsprechenden Montageschienen verbunden und dadurch versteift sind. Die Verbindung zwischen den Montageschienen und den Hohlprofilen der Rahmenschenkel kann so ausgeführt sein, dass die Montageschienen direkt mit entsprechenden Profilabschnitten des offenen Hohlprofils verschraubt sind oder mittels einer Klammer und einer Klemmschraube in der durch die Profilabschnitte des offenen Hohlprofils gebildeten Aufnahme festgelegt sind.

Ersichtlich resultieren aus dem Anbringen zusätzlicher Montageschienen ein erhöhter Montageaufwand und damit erhöhte Montagekosten. Weiterhin müssen zusätzliche Teile gefertigt und bereitgestellt werden, was ebenfalls zu einer Kostensteigerung bei der Fertigung und Lagerung der Rahmengestellbauteile führt. Schließlich erhöhen die zusätzlichen Montageschienen auch das Gesamtgewicht des Schaltschrankes. Dies ist insbesondere bei einem Transport des Schaltschrankes nachteilig.

Aus der DE 198 45 169 C1 und der DE 33 44 598 C1 sind Hohlprofile bekannt, bei denen jeweils an einer Seitenkante laschenartige Vorsprünge ausgebildet sind, die sich von der Seitenkante nach außen erstrecken und mit korrespondierenden Aufnahmen an der jeweils anderen Seitenkante klemmend oder formschlüssig in Eingriff bringbar sind.

Aus der EP 1 094 695 A1 ist ein Hohlprofil mit zwei Seitenkanten bekannt, wobei sich von jeder Seitenkante ein laschenartiger Vorsprung nach außen erstreckt, der in eine korrespondierende, U-förmige Aufnahme an der jeweils anderen Seitenkante klemmend und formschlüssig eingreift. Jeder der laschenartigen Vorsprünge erstreckt sich über die gesamte Länge der zugehörigen Seitenkante.

Die vorliegende Erfindung hat sich zum Ziel gesetzt, ein Hohlprofil eines Rahmenschenkels für ein Gestell bereitzustellen, das einerseits eine ausreichende Stabilität und Biegesteifigkeit aufweist und andererseits möglichst einfach und schnell zu fertigen ist.

Diese und andere Aufgaben werden gemäß einem ersten Aspekt durch einen Rahmenschenkel für ein Gestell mit den im Anspruch 1 angegebenen Merkmalen gelöst.

Im Unterschied zu einem üblichen Schweißverfahren zum Schließen des Hohlprofils mittels Stoffschluss wird erfindungsgemäß bei dem Hohlprofil auf eine lokale Erhitzung verzichtet, so dass ein thermischer Verzug und damit verbundene notwendige Nachbearbeitungsschritte entfallen. Weil das Hohlprofil selbst in Form des wenigstens einen Vorsprungs und der korrespondierenden Aufnahme Mittel zum Schließen des Profils vorsieht, kann auf die Fertigung und Bereitstellung zusätzlicher Teile, wie beispielsweise Schrauben oder Nieten, verzichtet werden, so dass eine vereinfachte Montage durch das erfindungsgemäße Hohlprofil ermöglicht wird. Dennoch ist das geschlossene Hohlprofil stabiler als ein offenes Hohlprofil, so dass auf zusätzliche Versteifungsmaßnahmen verzichtet werden kann.

Der Begriff "zylinderförmig" ist dabei nicht auf Zylinder mit einem kreisförmigen Querschnitt begrenzt, sondern umfasst gemäß der mathematischen Definition eines Zylinders auch Körper mit anderen Querschnittsformen.

Das im Wesentlichen flache Ausgangsmaterial des Hohlprofils kann beispielsweise ein Blechzuschnitt sein, der in einfacher Weise durch Biegen in eine zylinderförmige Profilform gebracht werden kann. Als Material kann hierbei jedes biegbare Material, beispielsweise Metalle, metallhaltige Materialien oder ein Faserverbundwerkstoff, gewählt werden.

Die einander gegenüberliegenden Seitenkanten des im Wesentlichen flachen Ausgangsmaterials, die durch das Umformen in Nachbarschaft zueinander gebracht werden, können im Wesentlichen parallel sein, d. h. sie müssen nicht notwendigerweise gerade verlaufen, sondern mit einem in etwa gleichbleibenden Abstand zueinander. Zur Verbindung der Seitenkanten reicht es aus, dass an jeder der Seitenkanten wenigstens ein Vorsprung ausgebildet ist, der in eine korrespondierende Aufnahme der jeweils anderen Seitenkante eingreifen kann. In der Regel wird es jedoch vorteilhaft sein, eine Anzahl von Vorsprüngen an jeder der Seitenkanten auszubilden.

Unabhängig von der Ausgestaltung der Aufnahme kann ein laschenartiger Vorsprung in diese klemmend oder formschlüssig eingreifen. Bei einer klemmenden Variante wird der jeweilige laschenartige Vorsprung durch Klemmkräfte kraftschlüssig in der korrespondierenden Aufnahme gehalten. Die erforderlichen Klemmkräfte können sich beispielsweise zwischen einem Vorsprung und einer Aufnahme ausbilden, wenn der Vorsprung bezüglich einer äußeren Abmessung (z.B. Breite) geringfügig größer dimensioniert ist als die korrespondierende Aufnahme, in der er Aufnahme finden soll (Presssitz). Bei der formschlüssigen Variante geht der laschenartige Vorsprung mit der korrespondierenden Aufnahme einen Formschluss ein, der einer Auszugsbewegung des Vorsprungs aus der Aufnahme entgegenwirkt. Hierzu kann der Vorsprung beispielsweise eine hakenartige Form mit einem Eingriffsabschnitt aufweisen, der in die Aufnahme verriegelnd eingreifen kann.

Gemäß einem zweiten Aspekt wird das Ziel der vorliegenden Erfindung durch einen Rahmenschenkel für ein Gestell erreicht, der ein Hohlprofil aufweist, das sich entlang seiner Längsachse erstreckt und durch Umformen eines im Wesentlichen flachen Ausgangsmaterials in eine zylinderförmige Profilform gebracht ist, wobei das Hohlprofil an zwei gegenüberliegenden Seitenkanten einen Verbindungsbereich zum Schließen des Hohlprofils aufweist. Ebenso wie bei dem Rahmenschenkel gemäß dem ersten Aspekt ist somit an jeder der zwei Seitenkanten wenigstens ein laschenartiger Vorsprung ausgebildet, der sich von der jeweiligen Seitenkante des Hohlprofils nach außen erstreckt, wobei die wenigstens zwei Vorsprünge entlang der Längsachse des Hohlprofils jeweils mit Versatz zueinander angeordnet und derart geformt sind, dass sie mit einem separat ausgebildeten Verriegelungselement klemmend oder formschlüssig in Eingriff bringbar sind.

Gemäß dem zweiten Aspekt wirken die beiden Seitenkanten folglich nicht unmittelbar zum Verschließen des Hohlprofils miteinander zusammen, sondern es ist ein zusätzliches, separat ausgebildetes Verriegelungselement vorgesehen, das zusammen mit entsprechenden Vorsprüngen an den Seitenkanten des Hohlprofils eine klemmende oder formschlüssige Verbindung der Seitenkanten bewirkt. Auch bei dieser Ausführungsform kann auf die Anwendung eines üblichen Schweißverfahrens zum Schließen des Hohlprofils mittels Stoffschlusses verzichtet werden, so dass die damit verbundenen Nachteile entfallen.

Grundsätzlich werden jeweils ein laschenartiger Vorsprung einer ersten Seitenkante und ein laschenartiger Vorsprung einer zweiten Seitenkante mit einem separat ausgebildeten Verriegelungselement klemmend oder formschlüssig verbunden. Dementsprechend können für mehrere Paare laschenartiger Vorsprünge einer jeweils ersten und zweiten Seitenkante auch mehrere Verriegelungselemente vorgesehen sein. Alternativ kann jedoch ein separat ausgebildetes Verriegelungselement mit mehreren oder allen Vorsprungspaaren klemmend oder formschlüssig in Eingriff gebracht werden, so dass diese zusammen mit dem Verriegelungselement eine lösbare Verbindung der Seitenkanten bewirken.

Weiterhin kann vorgesehen sein, dass die wenigstens zwei Vorsprünge gemeinsam eine Aufnahme für das Verriegelungselement bilden. Bei einer Weiterbildung dieser Ausführungsform können die Vorsprünge hülsenförmig ausgebildet sein, wobei durch die Vorsprünge gebildete Hülsen in einer geschlossenen Stellung des Hohlprofils miteinander zumindest im Wesentlichen fluchtend angeordnet sind. Die fluchtenden Hülsen bilden dabei die Aufnahme für das Verriegelungselement, das beispielsweise in die Aufnahme eingeschoben werden kann.

Die Aufnahme für das Verriegelungselement kann teilweise oder sogar vollständig im Inneren des Hohlprofils ausgebildet sein. Alternativ kann die Mantelfläche des Hohlprofils einen Teil der Aufnahme bilden. Hierbei kann derjenige Abschnitt der laschenartigen Vorsprünge, der den Eingriffabschnitt mit der jeweiligen Seitenkante verbindet, von der sich der Vorsprung nach außen erstreckt ("Verbindungsabschnitt"), eine ebene Fläche oder eine Seitenkante der Mantelfläche des Hohlprofils bilden. Wenn ein Teil der Aufnahme durch die Mantelfläche des Hohlprofils gebildet wird, hat dies den Vorteil, dass Material eingespart werden kann, was sowohl eine Kostenreduzierung als auch eine Gewichtsreduzierung der Hohlprofile zur Folge hat. Alternativ kann es jedoch auch sinnvoll sein, dass die Aufnahme vollständig oder nahezu vollständig im Inneren des Hohlprofils ausgebildet ist.

Weiterhin kann das Hohlprofil im Querschnitt polygonförmig ausgebildet und die Aufnahme für das Verriegelungselement an einer Ecke des Hohlprofilquerschnitts ausgebildet sein.

In einer alternativen Ausführungsform kann das Verriegelungselement wenigstens eine sich in Längsrichtung des Hohlprofils erstreckende Aufnahmenut zur klemmenden oder formschlüssigen Aufnahme wenigstens eines Abschnitts der wenigstens zwei Vorsprünge aufweisen. Bei dieser alternativen Ausführungsform bilden folglich nicht die Vorsprünge eine Aufnahme für das Verriegelungselement, sondern das Verriegelungselement stellt eine Aufnahme für die Vorsprünge bereit. Es ist dabei nicht notwendig, dass die Vorsprünge vollständig in der Aufnahmenut aufgenommen werden, vielmehr kann beispielsweise nur der sogenannte Eingriffsabschnitt jedes Vorsprungs zur klemmenden oder formschlüssigen Aufnahme in die Aufnahmenut eingeführt werden. Sind die Vorsprünge einer ersten und einer zweiten Seitenkante des Hohlprofils in der Aufnahmenut des Verriegelungselements klemmend oder formschlüssig aufgenommen, so werden diese in ihrer Relativposition zueinander fixiert, so dass die Seitenkanten stabil miteinander verbunden bleiben. Es kann dabei fertigungstechnisch sinnvoll sein, keine sich über die gesamte Länge des Verriegelungselements erstreckende Aufnahmenut vorzusehen, sondern eine oder mehrere Nutabschnitte, die sich in Längsrichtung des Hohlprofils erstrecken.

Ferner kann die Aufnahmenut einen Hinterschnitt aufweisen, in den die wenigstens zwei Vorsprünge formschlüssig einzugreifen vermögen. Ein solcher Hinterschnitt kann im Querschnitt betrachtet beispielsweise schwalbenschwanzförmig, prismenförmig oder kegelförmig ausgebildet sein. Die Vorsprünge sind dabei so geformt, dass sie mit ihrem Eingriffsabschnitt in den hinterschnittenen Bereich der Aufnahmenut eingreifen können. Hierzu werden die Vorsprünge zumindest mit ihrem Eingriffsabschnitt in die hinterschnittene Nut eingeführt und in eine Stellung gebracht, in der ihre Eingriffsabschnitte bzw. ihr Eingriffsabschnitt mit dem Hinterschnitt der Aufnahmenut zusammenwirken kann, um sie formschlüssig in der Aufnahmenut zu halten, wodurch die Verbindung der Seitenkanten des Hohlprofils hergestellt wird.

Ferner kann das Verriegelungselement eine Stange umfassen, die parallel zu der Längsachse des Hohlprofils über die im Wesentlichen gesamte Länge des Hohlprofils verläuft. Die Stange kann z. B. genau die gleiche Länge wie das zugeordnete Hohlprofil eines Rahmenschenkels aufweisen, jedoch kann es alternativ auch sinnvoll sein, dass sich die Stange etwas über die Länge des ersten Hohlprofils hinaus erstreckt oder etwas kürzer als das zugeordnete Hohlprofil ausgebildet ist, sich aber dennoch über den größten Teil der Länge des Hohlprofils erstreckt.

Die Gestaltung des Verriegelungselements als starres Verriegelungselement in Form einer Stange bzw. als Stab oder dergleichen ist besonders günstig, um eine definierte Lage der Seitenkanten zueinander und damit eine klar definierte Verbindung der Seitenkanten zu erzeugen. Alternativ kann jedoch auch eine Gestaltung des Verriegelungselements als flexibles oder (teil-)elastisches Verriegelungselement sinnvoll sein, beispielsweise in der Form eines Seils oder Gurts oder dergleichen.

Der wenigstens eine Vorsprung kann im Querschnitt betrachtet wenigstens einen Abschnitt mit einer Krümmung oder einem Knick aufweisen. Mit "im Querschnitt betrachtet" ist hierbei eine Ansicht gemeint, bei der das Hohlprofil in einer Ebene senkrecht zu seiner Längsachse geschnitten ist.

Eine im Querschnitt betrachtet gekrümmte Form des Vorsprungs umfasst jegliche Ausbildung der Vorsprünge mit einer Krümmung, die ein Hintergreifen oder Eingreifen durch die Vorsprünge ermöglicht. Als Unterfall der Krümmung können die Vorsprünge auch eine im Querschnitt betrachtet geknickte Form aufweisen, wobei der Unterschied zur vorgenannten Krümmung in einem kleineren Krümmungsradius besteht.

Jeder Vorsprung kann eine im Wesentlichen T-förmige Außenkontur aufweisen. Hierbei erstreckt sich der vertikale oder Längsschenkel der T-förmigen Außenkontur von der Seitenkante des Hohlprofils und mündet in dem Querschenkel, der zugleich das freie Ende des Vorsprungs bildet. Dabei kann der gesamte T-Querschenkel des jeweiligen Vorsprungs einen Eingriffsabschnitt bilden, mit dem der Vorsprung in Eingriff mit der korrespondierenden Aufnahme der jeweils anderen Seitenkante oder dem Verriegelungselement gebracht werden kann, während der Verbindungsabschnitt durch den T-Längsschenkel gebildet ist. Jedoch kann der Eingriffsabschnitt auch einen Teil des Längsschenkels des T-förmigen Vorsprungs mit umfassen oder auch nur durch einen Teil des T-Querschenkels gebildet sein. Der Begriff "Eingriffsabschnitt" definiert sich folglich nach seiner Funktion, die je nach Ausgestaltung der Vorsprünge unterschiedliche Abschnitte des Vorsprungs umfassen kann.

Bei dieser Ausgestaltung des wenigstens einen Vorsprungs kann auch die Aufnahme im Wesentlichen der Außenkontur des aufzunehmenden Vorsprungs in seinem flachen oder in seinem geformten Zustand (wenn der Vorsprung im Querschnitt betrachtet gekrümmt oder geknickt ist) entsprechen, d. h. bei einer T-förmigen Gestaltung des Vorsprungs der ersten Seitenkante kann auch die korrespondierende Aufnahme an der zweiten Seitenkante in der Form eines zu den Vorsprüngen komplementären T's ausgebildet sein. In diese ebenfalls T-förmige Aufnahme lässt sich dann ein T-förmiger Vorsprung der ersten Seitenkante lösbar einsetzen. Der Vorsprung der ersten Seitenkante kann beispielsweise in der korrespondierenden Aufnahme der zweiten Seitenkante eingehängt werden, d. h. mit seinem freien Ende in die korrespondierende Aufnahme eingeschoben werden und dann in einer Richtung quer zur Längsachse verschoben werden. Dadurch gelangt der Eingriffsabschnitt in eine Stellung, in der sein T-Querschenkel in formschlüssigen Eingriff mit dem die Aufnahme begrenzenden Material der zweiten Seitenkante gelangt. Dieser Wirkmechanismus des "Einhängens" lässt sich auch mit anders geformten Außenkonturen von Vorsprung und korrespondierender Aufnahme umsetzen, die ein gegenseitiges Hintergreifen der Vorsprünge bzw. einzelner Abschnitte der Vorsprünge ermöglichen.

Alternativ kann der wenigstens eine in der Aufnahme aufgenommene Vorsprung derart umgebogen werden, dass sein Eingriffsabschnitt und sein Verbindungsabschnitt einen Biegewinkel von etwa 180 Grad einschließen und zwischen sich das die Aufnahme der zweiten Seitenkante umgebende Material einklemmen. Durch das Umbiegen des Vorsprungs wird eine stabile Verbindung geschaffen und verhindert, dass der Vorsprung wieder aus der Aufnahme herausgezogen werden kann.

In einer Gestaltungsvariante, in der eine Vielzahl von Vorsprüngen an den jeweiligen Seitenkanten des Hohlprofils ausgebildet ist, kann eine Klemmung durch Umbiegen oder Umformen nur an bestimmten Vorsprüngen im Verbindungsbereich des Hohlprofils oder an allen Vorsprüngen erfolgen.

Weiterhin kann bei allen Ausführungsformen das Hohlprofil an seiner Mantelfläche eine Anzahl von Befestigungsaufnahmen aufweisen, die im Wesentlichen als zwei sich teilweise überlappende Öffnungen ausgebildet sind. Diese können beispielsweise zu einer Mittellängsachse der Seitenfläche des Hohlprofils, an der sie angebracht sind, symmetrisch ausgebildet und angeordnet sein. Die Symmetrie erleichtert die Montage erheblich.

Schließlich kann das Hohlprofil im Querschnitt bezüglich einer die Längsachse schneidenden diagonalen Achse symmetrisch ausgebildet sein. Auch durch diese Maßnahme ergibt sich eine Symmetrie des Hohlprofils, die einen vielfältigen Zusammenbau der Rahmenprofile ermöglicht.

Nachfolgend werden bevorzugte Ausführungsbeispiele der Erfindung anhand der beigefügten, schematischen Figuren erläutert. Es stellen dar:
- Fig. 1: eine isometrische Darstellung eines Gestells in Form eines Schaltschrankrahmengestells aus einer Anzahl miteinander verbundener, erfindungsgemäßer Rahmenschenkel;
- Fig. 2: eine isometrische Ansicht eines Hohlprofils einer ersten Ausführungsform eines erfindungsgemäßen Rahmenschenkels;
- Fig. 3: eine Detailansicht eines Verbindungsbereichs des Hohlprofils gemäß Fig. 2;
- Fig. 4a, 4b: geschnittene Ansichten des Verbindungsbereichs längs der Schnittlinien IVa-IVa und IVb-IVb aus Fig. 3;
- Fig. 5: eine isometrische Ansicht eines Hohlprofils einer zweiten Ausführungsform eines erfindungsgemäßen Rahmenschenkels;
- Fig. 6: eine isometrische Ansicht eines Hohlprofils einer dritten Ausführungsform eines erfindungsgemäßen Rahmenschenkels;
- Fig. 7: eine isometrische Ansicht eines Hohlprofils einer vierten Ausführungsform eines erfindungsgemäßen Rahmenschenkels, wobei ein Verriegelungselement mit dem Hohlprofil verbunden ist;
- Fig. 8a, 8b: Detailansichten des Schaltschrankrahmengestells aus Fig. 1 in zwei Ausführungsformen; und
- Fig. 9a - 9c: isometrische Ansichten der Baueile eines Eckverbinders zur Aufnahme der erfindungsgemäßen Rahmenschenkel.

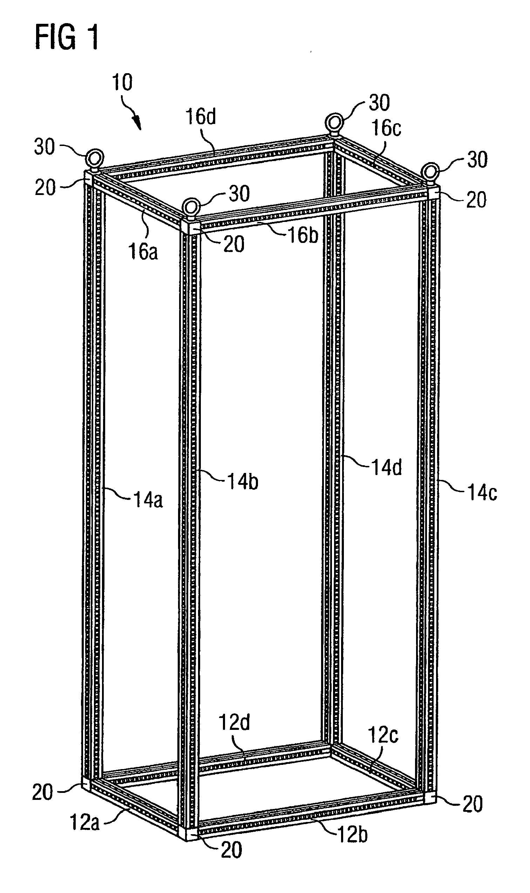

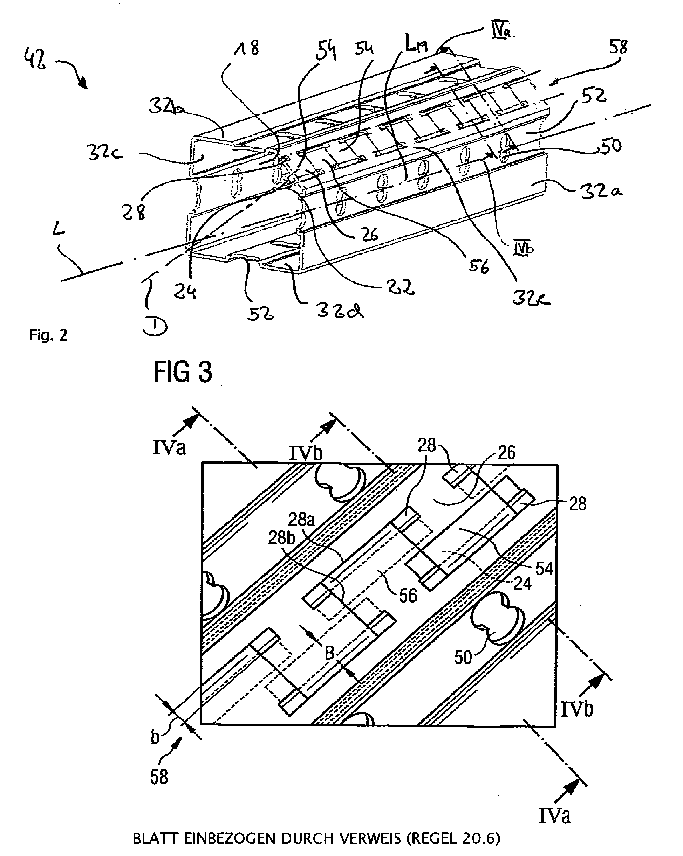

In Fig. 1 ist schematisch ein Schaltschrankrahmengestell gezeigt, das allgemein mit dem Bezugszeichen 10 versehen ist. Das Schaltschrankrahmengestell 10 umfasst in der gezeigten Ausführungsform vier untere horizontale Rahmenschenkel 12a, 12b, 12c und 12d und vier obere horizontale Rahmenschenkel 16a, 16b, 16c und 16d, die jeweils ein Rechteck bilden, sowie vier die beiden Rechtecke verbindende vertikale Rahmenschenkel 14a, 14b, 14c und 14d. Die erfindungsgemäßen Rahmenschenkel sind in den Eckbereichen des Schaltschrankrahmengestells miteinander durch sogenannte Eckverbinder 20 verbunden, wobei im gezeigten Ausführungsbeispiel je zwei miteinander verbundene Rahmenschenkel einen rechten Winkel zwischen sich einschließen. Die Rahmenschenkel sind allesamt aus unten noch näher beschriebenen zylinderförmigen Hohlprofilen 42 gebildet, die sich entlang einer Längsachse L erstrecken (vgl. Fig. 2 bis 7).

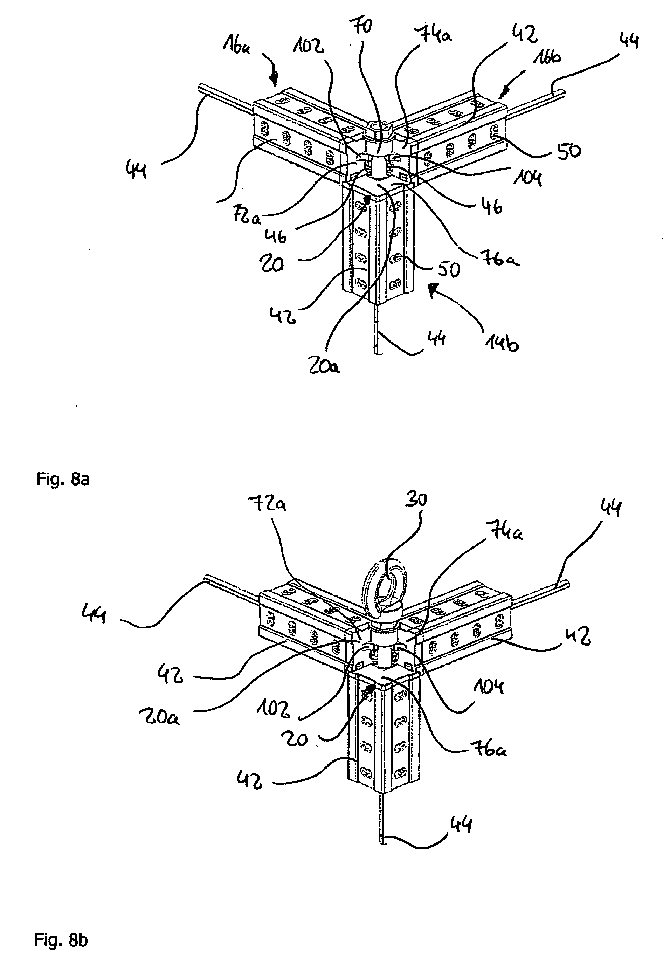

An den oberen Eckverbindern 20 können zusätzlich Kranösen 30 oder dergleichen angebracht sein, die ein Anheben und Versetzen des Schaltschrankrahmengestells 10 oder auch des fertig montierten Schaltschranks mithilfe eines Krans ermöglichen (vgl. auch Fig. 8b).

Die Fig. 2 bis 7 zeigen unterschiedliche Ausführungsformen des Hohlprofils eines Rahmenschenkels gemäß der vorliegenden Erfindung. Eine erste Ausführungsform ist in den Fig. 2 bis 4b dargestellt, bei der das Hohlprofil 42 in einem Verbindungsbereich 58 in seiner geschlossenen Profilform gehalten wird. Das Hohlprofil 42 erstreckt sich, wie alle nachfolgend angegebenen Hohlprofile, entlang einer Längsachse L. Die Längsachse kann die Mittellängsachse des Hohlprofils oder jede andere parallel zu dieser verlaufende Längsachse sein. Nachfolgend wird als Längsrichtung (bzw. "längs") eine Richtung bezeichnet, die entlang der Längsachse L verläuft.

In einem zur Längsachse senkrechten Querschnitt betrachtet ist das Hohlprofil 42 gemäß der Ausführungsform der Fig. 2 bis 4b als fünfeckiges Hohlprofil ausgebildet, wobei der Verbindungsbereich 58 eine fünfte Seitenfläche 32e des Hohlprofils 42 bildet. Von den restlichen vier Seitenflächen 32a - d sind jeweils zwei gegenüberliegende Seitenflächen parallel zueinander ausgebildet, nämlich die Seitenflächen 32a und 32c sowie die Seitenflächen 32b und 32d.

Jede der Seitenflächen 32a - 32d weist einen in etwa mittig angeordneten Bereich mit einer gegenüber dem Außenumfang des Hohlprofils 42 vertieften Fläche 52 auf, die sich ebenfalls in Längsrichtung erstreckt. Im Bereich dieser vertieften Fläche 52 sind eine Anzahl von Befestigungsaufnahmen 50 angeordnet, die als überlappende Doppellöcher in Gestalt einer Acht ausgebildet sind. Die Befestigungsaufnahmen 50 dienen zur Aufnahme von Befestigungsmitteln, mit deren Hilfe Einbauten in das Schaltschrankrahmengestell eingesetzt werden können.

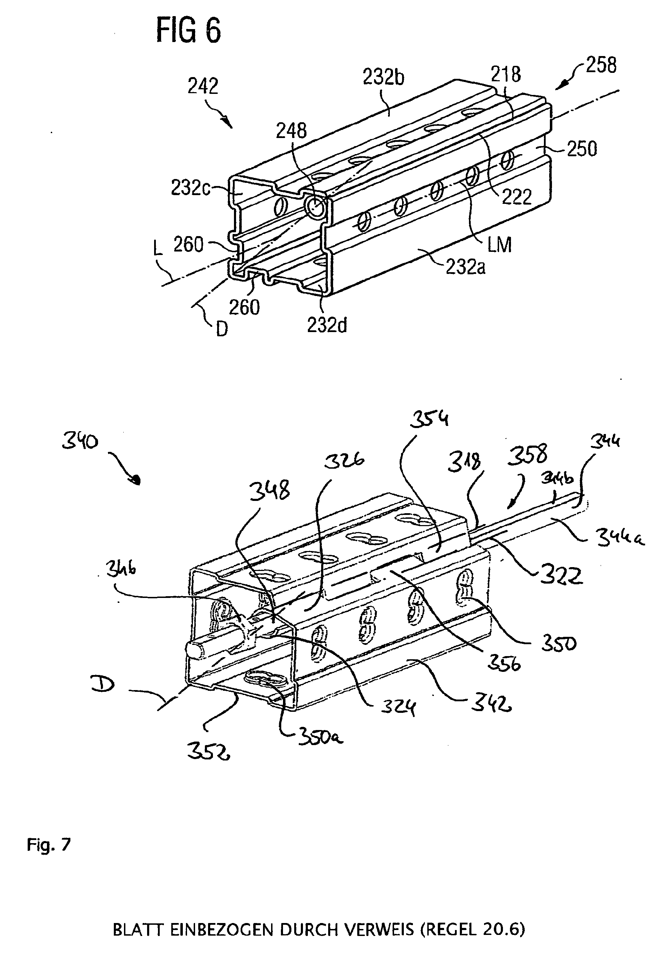

Bei dieser speziellen Ausführung der Aufnahmen 50 als Doppelloch werden anstelle einer einzigen bezüglich einer Mittellängsachse L_{M} der zugehörigen Seitenfläche 32a symmetrischen Befestigungsaufnahme (vgl. Fig. 6, Bezugszeichen 250), zwei exzentrische, zu der Mittellängsachse L_{M} symmetrische Befestigungsaufnahmen 50 an jeder der Seitenflächen 32a - d angebracht. Diese können sich, wie in den Figuren gezeigt, überschneiden oder mit Abstand zueinander angeordnet sein. Die Symmetrie der Befestigungsaufnahmen zu der Mittellängsachse L_{M} stellt sicher, dass es bezüglich der Einbausituation der in das Schaltschrankrahmengestell einzusetzenden Einbauten keinen vorab festgelegten oberen bzw. unteren Abschnitt der Hohlprofile gibt.

Die rinnenförmigen Vertiefungen, d. h. die gegenüber dem Außenumfang des Hohlprofils 42 vertieften Flächen 52, in den Seitenflächen 32a, 32b, 32c und 32d können beim Umformprozess des Hohlprofils 42 hergestellt werden, beispielsweise durch Biegen, und tragen zur Versteifung des Hohlprofils 42 bei.

Bei der Herstellung eines Hohlprofils 42 für einen Rahmenschenkel wird ein im Wesentlichen flaches Ausgangsmaterial, z. B. ein Blechzuschnitt, durch Umformen, beispielsweise Biegen, in eine Profilform gebracht, die später das geschlossene Hohlprofil bilden soll. Dabei stoßen zwei im Wesentlichen parallele, gegenüberliegende Seitenkanten des flachen Grundmaterials in einem Verbindungsbereich 58 aneinander. Diese Seitenkanten sind durch die strichlierten Linien 18 und 22 angedeutet.

Im Bereich der Seitenkanten 18, 22 sind jeweils mehrere Vorsprünge 54, 56 ausgebildet, die entlang der Längsachse L mit Versatz zueinander so angeordnet sind, dass ein Vorsprung 54 einer ersten Seitenkante 18 jeweils in den Zwischenraum, der zwischen zwei Vorsprüngen 56 der zweiten Seitenkante 22 gebildet ist, eingreifen kann und umgekehrt. Die nebeneinanderliegenden Vorsprünge einer ersten Seitenkante begrenzen folglich - zumindest in Längsrichtung L des Hohlprofils 42 - eine Aufnahme für einen Vorsprung der jeweils zweiten Seitenkante.

Die Vorsprünge 54, 56 haben im Wesentlichen die gleiche laschenartige Form, wobei im Bereich ihres freien Endes ein Eingriffsabschnitt 24 vorhanden ist, der durch einen Verbindungsabschnitt 26 mit der jeweiligen Seitenkante 18 oder 22 verbunden ist. Jeder der Vorsprünge 54, 56 wird während des Umformprozesses derart umgebogen, dass der Verbindungsabschnitt 26 am Übergang zu dem Eingriffsabschnitt 24 einen im Wesentlichen längs verlaufenden Biegeradius aufweist.

Bei einem geschlossenen Hohlprofil 42 liegen die Verbindungsabschnitte 26 der Vorsprünge 54 und 56 im Verbindungsbereich 58 alle in einer Ebene und bilden, wie in Fig. 2 gezeigt, die Seitenfläche 32e aus. Jeder Eingriffsabschnitt 24 ist gegenüber dem zugehörigen Verbindungsabschnitt 26 in einem Winkel von mehr als 0 Grad und weniger als 180 Grad, vorzugsweise etwa 90 Grad geneigt.

Die Vorsprünge 54, 56 sind T-förmig ausgebildet, wobei der Verbindungsabschnitt 26 den T-Rumpf (T-Längsbalken) bildet, der senkrecht auf den hierzu quer verlaufenden Eingriffsabschnitt 24 (T-Querbalken) trifft. Im Übergangsbereich von der Seitenkante 18 bzw. 22 zum Verbindungsbereich 26, d. h. am Fuß jedes T-förmigen Vorsprungs, sind zusätzlich zwei seitliche Einkerbungen 28 vorgesehen, die den Verbindungsabschnitt 26 lokal verjüngen.

Wie bereits vorstehend angedeutet, begrenzen zwei in der Ebene der Seitenfläche 32e liegende Verbindungsbereiche 26 der Vorsprünge 54 einer Seitenkante 18 zusammen mit der Seitenkante 18, von der sie sich nach außen erstrecken, jeweils einen Zwischenraum zur Aufnahme eines Vorsprungs 56 der jeweils anderen Seitenkante 22. Dieser Zwischenraum bzw. diese Aufnahme weist eine im Wesentlichen mit dem aufzunehmenden Vorsprung 56 korrespondierende Form auf. Dabei bilden die seitlichen Einkerbungen 28 im Fußbereich zweier nebeneinanderliegender Verbindungsbereiche 26 einen schlitzförmigen Aufnahmebereich 28a, der in seiner Längserstreckung der Längserstreckung des Eingriffsabschnitts 24 eines Vorsprungs entspricht bzw. ausreichend groß ist, um den Eingriffsabschnitt 24 aufzunehmen. Dieser erste schlitzförmige Aufnahmebereich 28a geht in einen zweiten Aufnahmebereich 28b über, der in seiner Längserstreckung der Längserstreckung des Verbindungsbereichs 26 eines Vorsprungs entspricht bzw. ausreichend groß ist, um diesen aufzunehmen.

Weil der erste schlitzförmige Aufnahmebereich 28a eine Breite b aufweist (vgl. Fig. 3) die kleiner ist als die Breite B des Eingriffsabschnitts 24 eines Vorsprungs, kann der Eingriffsabschnitt 24 nur in einem in der Einführungsebene etwas gekrümmten Zustand durch den ersten schlitzförmigen Aufnahmebereich 28a hindurchgeführt werden, um in die Aufnahme zwischen zwei Vorsprüngen der jeweils anderen Seitenkante eingehängt zu werden.

In einer anderen nicht dargestellten Ausführungsform kann das Einhängen dadurch erreicht werden, dass der Eingriffsabschnitt 24 von außen durch den schlitzförmigen Aufnahmebereich 28a in das Innere des Hohlprofils eingeführt wird und in einer Bewegungsrichtung, bei der die Seitenkanten 18 und 22 voneinander wegbewegt werden, an der Innenseite des Hohlprofils entlang gleitet, bis er in Eingriff mit einem Eingriffsabschnitt des jeweils gegenüberliegenden Vorsprungs gelangt. Solange die Seitenkanten in einer Stellung gehalten werden, in der der Eingriffsabschnitt nicht wieder durch den schlitzförmigen Ausnehmungsbereich aus der Ausnehmung herausgezogen werden kann, bleibt die Verbindung zwischen den Seitenkanten erhalten. Dies kann beispielsweise dadurch erreicht werden, dass das Hohlprofil auf einen Vorsprung oder dergleichen aufgesteckt wird, dessen Außenkontur die Seitenkanten im Verbindungsbereich unter Zugspannung in einem vorbestimmten Abstand zueinander hält, so dass eine Bewegung der Vorsprünge aus den korrespondierenden Ausnehmungen heraus nicht möglich ist.

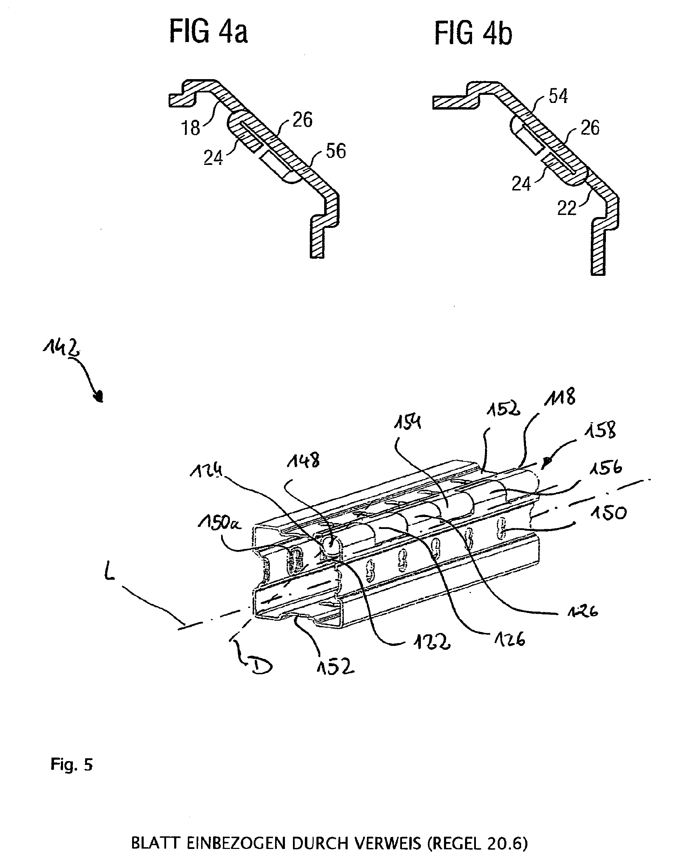

Alternativ kann, wie in der Ausführungsform der Fig. 2 bis 4b gezeigt, auch eine Sicherung dadurch gebildet sein, dass die Eingriffsabschnitte 24, sobald sie in die korrespondierenden Ausnehmungen 28a eingesetzt sind, derart umgebogen werden, dass sie einer Auszugsbewegung aus der Ausnehmung 28a heraus entgegenwirken. Dies kann beispielsweise dadurch erreicht werden, dass der Eingriffsabschnitt 24 und der zugehörige Verbindungsabschnitt 26 einen Biegewinkel von 180 Grad zwischen sich einschließen, wie in den Fig. 4a und 4b gezeigt. Weil die Breite B des Eingriffsabschnitts 24 größer ist als die Breite b des schlitzförmigen Aufnahmebereichs 28a, kann der umgebogene Eingriffsabschnitt nicht mehr aus der Ausnehmung herausgezogen werden. Auch blockieren sich die eingehängten Vorsprünge 54 und 56 gegenseitig dadurch, dass der Eingriffsabschnitt 24 eines Vorsprungs einer ersten Seitenkante jeweils den Verbindungsabschnitt eines Vorsprungs der jeweils anderen Seitenkante untergreift bzw. hintergreift (vgl. Fig. 4a und 4b). Auf diese Weise ist nun mit den Vorsprüngen 54 und 56 der beiden Seitenkanten 18 und 22 eine sichere Verbindung der Seitenkanten eines Hohlprofils zu einem geschlossenen Hohlprofil erreicht.

In den Fig. 5 bis 7 sind weitere Ausführungsformen eines Hohlprofils eines erfindungsgemäßen Rahmenschenkels gemäß einem zweiten Erfindungsaspekt gezeigt. Bei diesen alternativen Gestaltungsvarianten sind gleiche Elemente bzw. Merkmale eines Hohlprofils mit denselben Bezugszeichen versehen, denen in der zweiten Ausführungsform der Fig. 5 jedoch die Ziffer "1", in der dritten Ausführungsform der Fig. 6 die Ziffer "2" und in der vierten Ausführungsform der Fig. 7 die Ziffer "3" vorangestellt ist.

Das Hohlprofil 142 ist im Unterschied zu der ersten Ausführungsform der Fig. 2 bis 4b im Querschnitt viereckig ausgeführt, wobei die Seitenkanten der Seitenflächen 132a, 132b, 132c und 132d im Wesentlichen gleich lang sind und die einander gegenüberliegenden Seiten 132a und 132c bzw. 132b und 132d parallel zueinander sind. Die laschenartigen Vorsprünge 154, 156, die von den Seitenkanten 118 und 122 in einem Verbindungsbereich 158 vorstehen, sind ferner zu Hülsen umgeformt. In einer geschlossenen Stellung des Hohlprofils 142, wie in Fig. 5 gezeigt, fluchten die durch die Vorsprünge 154 und 156 geformten Hülsen derart miteinander, dass sie gemeinsam eine Aufnahme (Durchführung) 148 für ein Verriegelungselement ausbilden. Dabei sind die Vorsprünge 154, 156 solchermaßen umgeformt, beispielsweise durch Biegen, dass ein Teil (Verbindungsabschnitt 126) jedes Vorsprungs 154, 156 weiterhin auch einen Teil der Mantelfläche des zylinderförmigen Hohlprofils 142 bildet.

Auch bei dieser Ausführungsform sind die Vorsprünge 154 und 156 mit Versatz entlang der Längsachse L zueinander angeordnet, so dass ein Vorsprung 154 der ersten Seitenkante 118 in den Zwischenraum, der zwischen zwei Vorsprüngen 156 der zweiten Seitenkante 122 gebildet ist, eingreift und umgekehrt. Somit schließen sich die Vorsprünge 154, 156, insbesondere ihre Verbindungsabschnitte 126, in Richtung der Längsachse L betrachtet bündig aneinander an, wodurch eine glatte Seitenkante des Hohlprofils 142 im Verbindungsbereich 158 erzeugt wird. Die Eingriffsabschnitte 124 der Vorsprünge 154, 156 dienen hingegen dazu, wie nachfolgend unter Bezugnahme auf die Fig. 7 erläutert, in Eingriff mit einem separat ausgebildeten Verriegelungselement zu gelangen.

In der Fig. 6 ist eine Abwandlung gezeigt, bei der die Seitenkanten 218 und 222 aneinander anliegen und die Vorsprünge derart in das Innere des Hohlprofils 242 gebogen wurden, dass die gesamte Aufnahme 248, in die zur Verbindung der Seitenkanten 218 und 222 ebenfalls ein separates Verriegelungselement eingeführt werden kann, im Inneren des Hohlprofils 242 angeordnet ist. Weiterhin sind an zwei Seitenflächen 232c und 232d zusätzlich Nuten 260 eingeformt, die sich ebenfalls in Längsrichtung des Hohlprofils 242 erstrecken und zur Aufnahme beispielsweise eines Dichtungselements dienen können.

Bei der in der Fig. 7 gezeigten Ausführungsform ist die Aufnahme 348 ebenfalls vollständig im Innenraum des Hohlprofils 342 ausgebildet. Ferner sind die einzelnen Vorsprünge 354 und 356 derart umgeformt, dass sie im Querschnitt betrachtet hakenförmig ausgebildet sind und nicht, wie in Fig. 5, hülsenförmige geschlossene Aufnahmebereiche bilden. Stattdessen ist das freie Ende des jeweiligen Vorsprungs 354 und 356 mit Abstand zu dem Verbindungsabschnitt 326 angeordnet. Es reicht dabei aus, dass die Vorsprünge 354 und 356 derart umgeformt sind, dass sie geeignet sind, ein Verriegelungselement 344 zwischen sich aufzunehmen und sich so daran abstützen, dass eine Lösebewegung der Seitenkanten 318 und 322 voneinander weg blockiert ist.

In der dargestellten Ausführungsform der Fig. 7 ist das Verriegelungselement 344 als eine Gewindestange mit einem Außengewindeabschnitt 344a ausgebildet, der sich über die gesamte Länge der Gewindestange 344 erstreckt. Weiterhin sind zwei entgegengesetzt angeordnete Abschnitte 344b an dem Verriegelungselement 344 ausgebildet, die sich ebenfalls entlang der Längsachse L erstrecken und kein Gewinde aufweisen. Diese erleichtern gegebenenfalls die Einführung des Verriegelungselements 344. Das Verriegelungselement 344 kann, sobald es in die Aufnahme 348 des Hohlprofils 342 eingeführt wurde, an seinen Enden mit je einer Mutter 346 gegen eine Auszugsbewegung in Längsrichtung gesichert werden.

Die Hohlprofile 142, 242, 342 der Fig. 5 bis 7 werden alle, wie die Hohlprofile der Fig. 2 bis 4b, durch einen Umformprozess, beispielsweise durch Biegen oder Stanzbiegen, in ihre gewünschte Form gebracht, wobei die Befestigungsaufnahmen 150, 250, 350 zusätzlich einen verstärkenden in das Innere des Hohlprofils ragenden, umlaufenden Kragen 150a, 250a, 350a aufweisen.

Wie in den Fig. 8a und 8b gezeigt, kann das Verriegelungselement 344 zudem gemeinsam mit weiteren Elementen eines Schaltschrankrahmengestells in der Art einer Spanneinheit 340 zusammenwirken, wie nachfolgend noch beschrieben wird.

Allen Ausführungsbeispielen für ein Hohlprofil eines erfindungsgemäßen Rahmenschenkels ist eine im Querschnitt achsensymmetrische Gestaltung gemein, wobei die Symmetrieachse durch eine die Mittellängsachse schneidende Diagonale D gebildet ist. Durch diese Symmetrieeigenschaft der Hohlprofile wird sichergestellt, dass es bezüglich der Einbausituation keinen vorab festgelegten oberen bzw. unteren Abschnitt der Hohlprofile gibt, wodurch die Montage des Schaltschrankrahmengestells erheblich vereinfacht wird.

In den Fig. 8a und 8b ist gezeigt, wie drei Rahmenschenkel 16a, 16b und 14b mittels eines Eckverbinders 20 und drei den Rahmenschenkeln zugeordneten Spanneinheiten 40 verbunden werden. Dabei ist es vorteilhaft, wenn alle Rahmenschenkel des Schaltschrankrahmengestells 10 einen identischen Profilquerschnitt aufweisen, da die Herstellungskosten verringert werden können, wenn die einzelnen Rahmenschenkel nur entsprechend der gewünschten Länge von einem Profilstrang eines vorgeformten Hohlprofils abgelängt werden müssen.

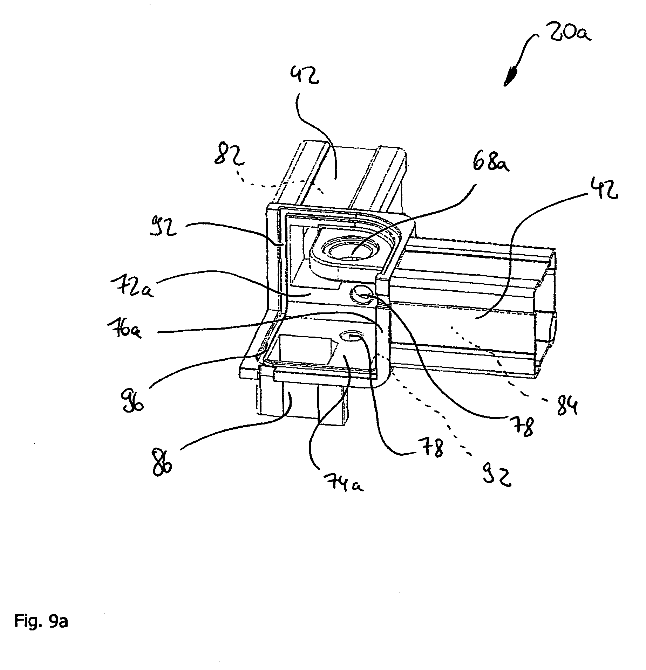

Der Eckverbinder 20, von dem in den Fig. 8a und 8b nur ein erster Teil 20a gezeigt ist, weist drei Wandabschnitte 72, 74 und 76 auf, an denen die zu verbindenden Rahmenschenkel 16a, 16b und 14b stirnseitig anliegen. Zusätzlich kann der Eckverbinder an jedem seiner Wandabschnitte 72a, 74a und 76a einen Vorsprung 82, 84 und 86 (vgl. Fig. 9a) oder dergleichen aufweisen, der sich in Richtung zu dem zu verbindenden Rahmenschenkel erstreckt und auf den das Hohlprofil des zu verbindenden Rahmenschenkels aufgesteckt werden kann (in Figur 8a sind auf den Vorsprüngen 82 und 84 aufgesteckte Hohlprofilabschnitte 42 dargestellt).

Weiterhin weist der Eckverbinder 20 im Bereich jedes Wandabschnitts 72a, 74a, 76a ausgebildete Durchgangsbohrungen 78 auf, durch die sich die Verriegelungselemente 44 des jeweiligen Rahmenschenkels 16a, 16b, 14b hindurch erstrecken können. Die Durchgangsbohrungen 78 können sich durch die Vorsprünge 82, 84 und 86 erstrecken. Alternativ können die Vorsprünge mit Versatz zu den Durchgangsbohrungen angeordnet sein.

Von einer dem Rahmenschenkel gegenüberliegenden Seite des jeweiligen Wandabschnitts kann dann auf das sich durch die Durchgangsbohrung 78 erstreckende Verriegelungselement ein Kraftübertragungsglied (Begrenzungsglied) angebracht werden, das einen größeren Außendurchmesser als die Durchgangsbohrung 78 hat. Im Falle eines als Gewindestange 44 ausgebildeten Verriegelungselements kann das Kraftübertragungsglied, wie in Fig. 7 gezeigt, eine Mutter 46 sein, die auf das Außengewinde 44a der Gewindestange 44 aufgeschraubt wird. Mit Hilfe der Mutter 46 wird ein Herausziehen der Gewindestange 44 durch die Durchgangsbohrung 78 verhindert, so dass das Verriegelungselement einseitig festgelegt ist. Gleiches wird an dem jeweils anderen Ende der zu verbindenden Rahmenschenkel ebenfalls mit einem Begrenzungsglied (spiegelbildliche Ausführungsform) oder durch eine unmittelbare Verbindung des Verriegelungselements mit einem Rahmenschenkel oder Eckverbinder erreicht.

Somit sind bei einer spiegelbildlichen Ausführungsform jeweils zwischen zwei Muttern ein Rahmenschenkel sowie zwei Wandabschnitte eines Eckverbinders angeordnet. Zusätzlich zu der vorstehend erläuterten Blockierung des Verriegelungselements 44 in der Aufnahme 48 des Hohlprofils 42, kann mit Hilfe der Muttern 46 eine Verspannung der zwischen diesen angeordneten Bauteilen erreicht werde, indem die wirksame Länge des Verriegelungselements 44 beispielsweise durch eine Schraubbewegung der Muttern 46 aufeinander zu verkürzt wird. Werden die Rahmenschenkel eines Schaltschrankrahmengestells 10 auf diese Weise endseitig jeweils gegen zwei Eckverbinder 20 verspannt, wird auf diese Weise eine Verbindung der Rahmenschenkel über die Eckverbinder 20 zu einem Rahmengestell 10 erreicht. Alternativ wäre auch eine Verspannung der Rahmenschenkel gegeneinander ohne Zwischenschaltung von Eckverbindern denkbar.

Dieser Effekt einer Verspannung kann jedoch nicht nur mit Hilfe eines als Gewindestange ausgebildeten Verriegelungselements und zwei als Muttern ausgebildeten Begrenzungsgliedern erzeugt werden. So kann das Verriegelungselement auch als ein Spanngurt, Spannseil oder dergleichen ausgebildet sein und mit einem Klips oder dergleichen als Begrenzungsglied in der vorstehend beschrieben Weise zusammenwirken. Zudem kann ein Begrenzungsglied auch integral an dem Verriegelungselement oder an dem zu verbindenden Eckverbinder oder Rahmenschenkel ausgebildet sein. So kann beispielsweise das Verriegelungselement unmittelbar (z. B. mit einem Knoten) an dem Eckverbinder oder an einem separaten Begrenzungsglied befestigt werden. Weiterhin kann das Verriegelungselement teilweise starr ausgebildet sein und beispielsweise Vorsprünge (Rastnasen) aufweisen, die mit korrespondierenden Rastnasen oder einer entsprechend geformten Aufnahme derart zusammenwirken, dass eine Durchführung nur in eine Richtung möglich ist (Prinzip Kabelbinder). Auch können Ausnehmungen an dem Verriegelungselement vorgesehen sein, in die ein Spannkörper (als Verriegelungsmittel), wie z. B. eine Spannhülse, eingesteckt werden kann, um eine Auszugsbewegung des Verriegelungselements aus der Durchgangsbohrung des Eckverbinders entgegenzuwirken etc.

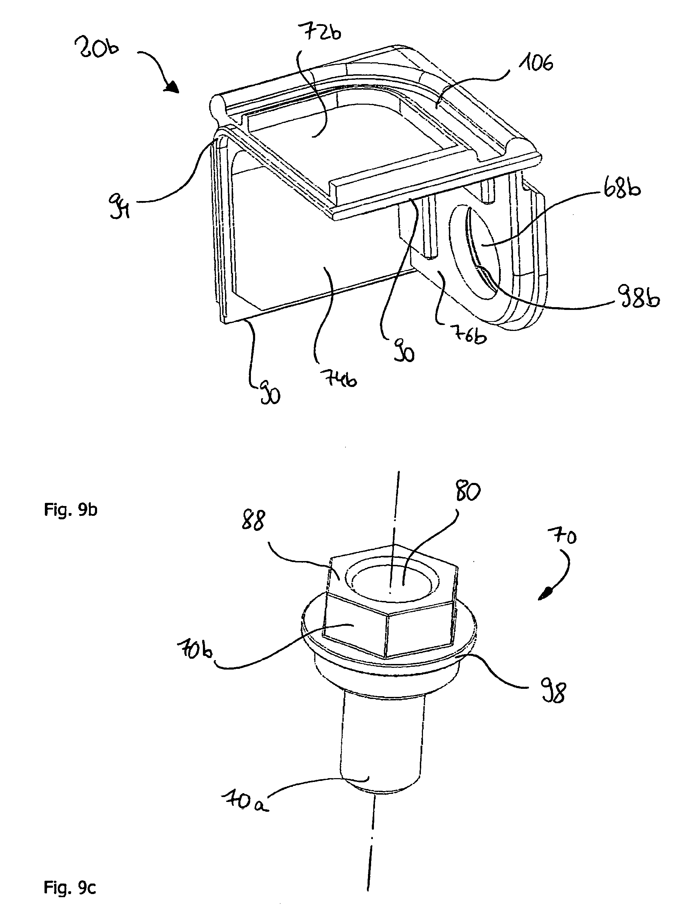

Wie bereits vorstehend angedeutet, ist der Eckverbinder 20 hier zweiteilig ausgebildet (vgl. Fig. 9a und 9b). Der zweite Teil 20b des Eckverbinders 20 entspricht in seinem Aufbau im Wesentlichen dem ersten Teil 20a mit drei im Wesentlichen zueinander senkrechten Wandabschnitten 72b, 74b, 76b. Im zusammengebauten Zustand begrenzen die Wandabschnitten 72a, 74a und 76a des ersten Teils 20a und die Wandabschnitten 72b, 74b, 76b des zweiten Teils 20b einen quaderförmigen inneren Hohlraum.

An den äußeren Wandabschnitten 72b, 74b, 76b weist der zweite Teil 20b im Unterschied zu dem ersten Teil 20a jedoch keine Vorsprünge zur Verbindung mit Rahmenschenkeln auf. Stattdessen kann zumindest an einem äußeren Wandabschnitt 72b eine zur Außenseite offene Nut 106 angeordnet sein, die in zusammengebautem Zustand mit entsprechenden Aufnahmenuten (vgl. Fig. 6, Nuten 260) an den verbundenen Rahmenschenkeln fluchtet und zur Aufnahme eines Dichtungselements dienen kann.

Um die beiden Teile 20a und 20b des Eckverbinders 20 miteinander zu verbinden, kann eine separate Spannschraube oder dergleichen eingesetzt werden. Es kann jedoch auch besonders vorteilhaft, wie in den Fig. 8a und 8b gezeigt, eines der als Gewindestange ausgeführten Verriegelungselemente hierfür genutzt werden. Bei dieser Ausführungsform wird ein speziell ausgebildetes Begrenzungsglied 70 (vgl. auch Fig. 9c) auf das Außengewinde 44a der Gewindestange 44 von außen aufgeschraubt. Hierzu weist der zweite Teil 20b des Eckverbinders 20 an einem Wandabschnitt 76b eine mit der Durchgangsbohrung 78 des ersten Teils 20a fluchtende Befestigungsöffnung 68b auf. Durch diese wird das Begrenzungsglied 70 auf die Gewindestange 44 aufgesetzt. Das Begrenzungsglied 70 weist hierzu an seinem ersten Ende 70a eine Innenbohrung (nicht dargestellt) mit Innengewinde aufweist, das auf die Gewindestange 44 aufgeschraubt werden kann. Zudem kann, wie in Fig. 9c gezeigt, auch eine Bohrung an dem gegenüberliegenden zweiten Ende 70b des Begrenzungsglieds 70 ausgebildet sein, die ebenfalls ein Innengewinde aufweist und es so ermöglicht, dass beispielsweise eine Kranöse 30 in diese eingeschraubt wird. Zur Vereinfachung der Herstellung des Begrenzungsglieds 70 können beide Bohrungen als eine Durchgangsbohrung 80 mit Innengewinde (nicht dargestellt) ausgebildet sein.

An seinem zweiten Ende 70b besitzt das Begrenzungsglied 70 außerdem einen Schraubkopf 88 (üblicherweise als Sechskant ausgebildet) mit einem Kragen 98. Der Schraubkopf 88 ist so geformt ist, dass ein Monteur mit einem entsprechendem Werkzeug das Begrenzungsglied 70 in der gewünschten Richtung drehen kann, bis der Kragen an der Außenfläche des Wandabschnitts 76b bzw. einer die Befestigungsöffnung 68b umgebenden Vertiefung 98b zur Anlage kommt und auf diese Weise den ersten Teil 20a mit dem zweiten Teil 20b verspannt.

Der Zusammenbau des Schaltschrankrahmengestells 10 wird nachfolgend unter Bezugnahme auf die Figuren beispielhaft an einem Eckverbinder 20 beschrieben: In einem ersten Schritt werden die Rahmenschenkel so auf die Vorsprünge 82, 84, 86 des Eckverbinders 20 aufgesteckt, dass die Durchführung 48 jedes Rahmenschenkels mit den Durchgangsbohrungen 78 am Eckverbinder 20 fluchtet. Dann wird die Gewindestange 44 eines jeden Rahmenschenkels in die Durchführung 48 des Hohlprofils 42 soweit eingeführt, bis sich ein freies Ende der Gewindestange 44 durch die jeweilige Durchgangsbohrung 78 des Eckverbinders 20 auf die gegenüberliegende Seite des jeweiligen Wandabschnitts hindurch erstreckt.

Die in die Aufnahme bzw. Durchführung 48 eingesteckte Gewindestange 44 hält in dieser Stellung bereits die Seitenkanten des Hohlprofils verbunden.

In einem weiteren Schritt werden die Muttern 46 auf das freie Ende der Gewindestangen 44 der Rahmenschenkel 16a und 16b aufgeschraubt, so dass sich die Gewindestangen 44 nicht mehr durch die Durchgangsbohrungen 78 in Richtung zu dem Vorsprung, auf dem der Rahmenschenkel aufgesteckt ist, ziehen lassen. Sobald beide einem Verriegelungselement zugeordneten Kraftübertragungsglieder in Eingriff mit diesem stehen und sich an den zu verspannenden Bauteilen abstützen, kann durch Justieren der Schraubtiefe die Spannkraft angepasst werden. Mit Hilfe der Muttern 46 wird somit einerseits die Gewindestange in ihrer Relativstellung zu dem Hohlprofil fixiert und andererseits eine Vorspannung der zwischen den Muttern 46 aufgenommenen Bauteile erreicht, die ein Verbinden der Bauteile des Schaltschrankrahmengestells ermöglicht.

Anschließend wird der zweite Teil 20b des Eckverbinders 20 mit dem ersten Teil 20a verbunden. Hierzu wird der zweite Teil 20b mit seinen Führungskanten 90 in korrespondierende Führungsschienen 92 eingesetzt und soweit in den ersten Teil 20a eingeschoben, bis seine Führungskante 94 in die Führungsschiene 96 des ersten Teils 20a eingreift. In dieser Stellung fluchtet die Öffnung 68b mit der Durchgangsbohrung 78, durch die sich die Gewindestange 44 des Rahmenschenkels 14b erstreckt.

Zur Stabilisierung des Wandabschnitts 76b des zweiten Teils 20b ist der erste Teil 20a, wie in Fig. 9a gezeigt, mit einer Stützfläche 100 versehen, die eine korrespondierende Befestigungsöffnung 68a aufweist, welche ebenfalls mit der Befestigungsöffnung 68b des zweiten Teils 20b fluchtet. Eine alternative Gestaltung ist in den Fig. 8a und 8b gezeigt, in denen von den Innenflächen der Wandabschnitte 72a, 74a Stütznasen 102, 104 in Richtung zu dem von den Teilen 20a, 20b des Eckverbinders 20 gebildeten Hohlraum vorstehen.

Nun wird das Begrenzungsglied 70 (vgl. auch Fig. 9c) auf das Außengewinde 44a der Gewindestange 44 von außen soweit in Richtung zu dem Rahmenschenkel 14b aufgeschraubt, bis der Kragen 98 an der Außenfläche des Wandabschnittes 76b bzw. einer die Befestigungsöffnung 68b umgebenden Vertiefung zur Anlage kommt und auf diese Weise den ersten Teil 20a mit dem zweiten Teil 20b sowie den Rahmenschenkel 16b mit dem Eckverbinder 20 einseitig verspannt.

Ergänzend kann eine Kranöse 30 in die Innenbohrung 80 des Schraubkopfes 88 eingeschraubt werden.

## Patentansprüche

1. Rahmenschenkel (12a-d, 14a-d, 16a-d) für ein Gestell (10), mit einem Hohlprofil (42), das sich entlang seiner Längsachse (L) erstreckt und durch Umformen eines im Wesentlichen flachen Ausgangsmaterials in eine zylinderförmige Profilform gebracht ist, wobei das Hohlprofil (42) an zwei gegenüberliegenden Seitenkanten (18, 22) einen Verbindungsbereich (58) zum Schließen des Hohlprofils (42) aufweist, wobei an zumindest einer Seitenkante (18, 22) wenigstens ein laschenartiger Vorsprung (54, 56) ausgebildet ist, der sich von der Seitenkante (18, 22) des Hohlprofils (42) nach außen erstreckt und derart geformt ist, dass er mit wenigstens einer korrespondierenden Aufnahme an der jeweils anderen Seitenkante (18, 22) klemmend oder formschlüssig in Eingriff bringbar ist,
**dadurch gekennzeichnet, dass** an jeder der Seitenkanten (18, 22) wenigstens ein laschenartiger Vorsprung (54, 56) und wenigstens eine korrespondierende Aufnahme an der jeweils anderen Seitenkante (18, 22) ausgebildet sind, wobei die Vorsprünge (54, 56) entlang der Längsachse (L) des Hohlprofils (42) zueinander versetzt angeordnet sind, und dass eine korrespondierende Aufnahme für einen Vorsprung (54) der ersten Seitenkante (18) jeweils zumindest teilweise durch zwei nebeneinander liegende Vorsprünge (56) der zweiten Seitenkante (22) begrenzt ist.

2. Rahmenschenkel für ein Gestell, mit einem Hohlprofil (142; 242; 342), das sich entlang seiner Längsachse (L) erstreckt und durch Umformen eines im Wesentlichen flachen Ausgangsmaterials in eine zylinderförmige Profilform gebracht ist, wobei das Hohlprofil (142; 242; 342) an zwei gegenüberliegenden Seitenkanten (118, 122; 218, 222; 318, 322) einen Verbindungsbereich (158; 258; 358) zum Schließen des Hohlprofils (142; 242; 342), aufweist,
**dadurch gekennzeichnet, dass** an jeder der zwei Seitenkanten wenigstens ein laschenartiger Vorsprung (154, 156; 254, 256; 354, 356) ausgebildet ist, der sich von der jeweiligen Seitenkante des Hohlprofils nach außen erstreckt, wobei die wenigstens zwei Vorsprünge entlang der Längsachse (L) des Hohlprofils (142; 242; 342) jeweils mit Versatz zueinander angeordnet sind und derart geformt sind, dass sie mit einem separat ausgebildeten Verriegelungselement (344) klemmend oder formschlüssig in Eingriff bringbar sind.

3. Rahmenschenkel nach Anspruch 2,
**dadurch gekennzeichnet, dass** die wenigstens zwei Vorsprünge (154, 156; 254, 256; 354, 356) gemeinsam eine Aufnahme für das Verriegelungselement (344) bilden.

4. Rahmenschenkel nach Anspruch 3,
**dadurch gekennzeichnet, dass** die Vorsprünge (154, 156; 254, 256) hülsenförmig ausgebildet und so angeordnet sind, dass durch die Vorsprünge gebildete Hülsen in einer geschlossenen Stellung des Hohlprofils (142; 242) zumindest im Wesentlichen miteinander fluchten.

5. Rahmenschenkel nach Anspruch 2,
**dadurch gekennzeichnet, dass** das Verriegelungselement wenigstens eine sich in Längsrichtung des Hohlprofils erstreckende Aufnahmenut zur klemmenden oder formschlüssigen Aufnahme wenigstens eines Abschnittes der wenigstens zwei Vorsprünge aufweist.

6. Rahmenschenkel nach Anspruch 5,
**dadurch gekennzeichnet, dass** die Aufnahmenut einen Hinterschnitt aufweist, in den die wenigstens zwei Vorsprünge formschlüssig einzugreifen vermögen.

7. Rahmenschenkel nach einem der Ansprüche 2 bis 6,
**dadurch gekennzeichnet, dass** das Verriegelungselement (344) eine Stange umfasst, die parallel zu der Längsachse (L) des Hohlprofils (342) über die im Wesentlichen gesamte Länge des Hohlprofils verläuft.

8. Rahmenschenkel nach einem der vorhergehenden Ansprüche,
**dadurch gekennzeichnet, dass** der wenigstens eine Vorsprung (154, 156; 254, 256; 354, 356) im Querschnitt betrachtet wenigstens abschnittsweise geknickt oder gekrümmt ist.

9. Rahmenschenkel nach einem der vorhergehenden Ansprüche,
**dadurch gekennzeichnet, dass** der wenigstens eine Vorsprung (54, 56) eine im Wesentlichen T-förmige Außenkontur aufweist.

10. Rahmenschenkel nach einem der vorhergehenden Ansprüche,
**dadurch gekennzeichnet, dass** das Hohlprofil (42; 142; 342) an seiner Mantelfläche eine Anzahl von Befestigungsaufnahmen (50; 150; 350) aufweist, die im Wesentlichen als zwei sich teilweise überlappende Öffnungen ausgebildet sind.

## Claims

1. Frame piece (12a-d, 14a-d, 16a-d) for a rack (10), having a hollow profile (42) which extends along its longitudinal axis (L) and is brought into a cylindrical profile shape by shaping a substantially flat starting material, the hollow profile (42), on two opposite lateral edges (18, 22), having a connecting region (58) for closing the hollow profile (42), at least one tab-like projection (54, 56) being formed on at least one lateral edge (18, 22), which projection extends outwards from the lateral edge (18, 22) of the hollow profile (42) and is shaped such that it can be brought into engagement with at least one corresponding receptacle on the respectively other lateral edge (18, 22) in a clamping or positive locking manner,
**characterized in that** at least one tab-like projection (54, 56) is formed on each of the lateral edges (18, 22) and at least one corresponding receptacle is formed on the respectively other lateral edge (18, 22), the projections (54, 56) being arranged offset from one another along the longitudinal axis (L) of the hollow profile (42), and **in that** a corresponding receptacle for a projection (54) of the first lateral edge (18) is delimited in each case at least partially by two adjacent projections (56) of the second lateral edge (22).

2. Frame piece for a rack, having a hollow profile (142; 242; 342) which extends along its longitudinal axis (L) and is brought into a cylindrical profile shape by shaping a substantially flat starting material, the hollow profile (142; 242; 342), on two opposite lateral edges (118, 122; 218, 222; 318, 322), having a connecting region (158; 258; 358) for closing the hollow profile (142; 242; 342),
**characterized in that** at least one tab-like projection (154, 156; 254, 256; 354, 356) is formed on each of the two lateral edges, which projection extends outwards from the respective lateral edge of the hollow profile, the at least two projections being arranged along the longitudinal axis (L) of the hollow profile (142; 242; 342) in each case with an offset from one another and being shaped such that they can be brought into engagement with a separately formed locking element (344) in a clamping or positive locking manner.

3. Frame piece according to Claim 2,
**characterized in that** the at least two projections (154, 156; 254, 256; 354, 356) jointly form a receptacle for the locking element (344).

4. Frame piece according to Claim 3,
**characterized in that** the projections (154, 156; 254, 256) are of sleeve-shaped form and arranged such that sleeves formed by the projections are at least substantially aligned with one another in a closed position of the hollow profile (142; 242).

5. Frame piece according to Claim 2,
**characterized in that** the locking element has at least one receiving groove, extending in the longitudinal direction of the hollow profile, for the clamping or positive locking reception of at least one portion of the at least two projections.

6. Frame piece according to Claim 5,
**characterized in that** the receiving groove has an undercut, in which the at least two projections are able to engage positively:

7. Frame piece according to one of Claims 2 to 6,
**characterized in that** the locking element (344) comprises a rod which runs parallel to the longitudinal axis (L) of the hollow profile (342) over substantially the entire length of the hollow profile.

8. Frame piece according to one of the preceding claims,
**characterized in that** the at least one projection (154, 156; 254, 256; 354, 356) is sharply bent, or curved, at least in portions, when viewed in cross-section.

9. Frame piece according to one of the preceding claims,
**characterized in that** the at least one projection (54, 56) has a substantially T-shaped outer contour.

10. Frame piece according to one of the preceding claims,
**characterized in that** the hollow profile (42; 142; 342) has on its circumferential surface a number of fastening recesses (50; 150; 350) which are formed substantially as two partially overlapping openings.

## Revendications

1. Montant de cadre (12a à 12d, 14a à 14d, 16a à 16d) pour un bâti (10), comportant un profilé creux (42) qui s'étend le long de son axe longitudinal (L) et qui présente une forme de profilé cylindrique obtenue par formage d'un matériau de départ sensiblement plat, ce profilé creux (42) présentant sur deux arêtes latérales opposées (18, 22) une zone de liaison (58) servant à fermer le profilé creux (42), au moins une partie saillante (54, 56) du genre languette étant réalisée sur au moins une arête latérale (18, 22), laquelle partie saillante s'étend vers l'extérieur depuis l'arête latérale (18, 22) du profilé creux (42) et est formée de manière à pouvoir être amenée en prise par blocage ou par coopération de forme avec au moins un logement correspondant sur l'autre arête latérale respective (18, 22),
**caractérisé en ce qu'**il est formé, sur chacune des arêtes latérales (18, 22), au moins une partie saillante (54, 56) du genre languette, et sur l'autre arête latérale respective (18, 22), au moins un logement correspondant, les parties saillantes (54, 56) étant disposées décalées les unes par rapport aux autres le long de l'axe longitudinal (L) du profilé creux (42), et **en ce qu'**un logement correspondant, destiné à recevoir la partie saillante (54) de la première arête latérale (18), est respectivement délimité au moins en partie par deux parties saillantes (56) adjacentes de la deuxième arête latérale (22).

2. Montant de cadre pour un bâti, comportant un profilé creux (142 ; 242 ; 342) qui s'étend le long de son axe longitudinal (L) et qui présente une forme de profilé cylindrique obtenue par formage d'un matériau de départ sensiblement plat, ce profilé creux (142 ; 242 ; 342) présentant sur deux arêtes latérales opposées (118, 122 ; 218, 222 ; 318, 322) une zone de liaison (158 ; 258 ; 358) servant à fermer le profilé creux (142 ; 242 ; 342),
**caractérisé en ce qu'** il est formé sur chacune des deux arêtes latérales au moins une partie saillante du genre languette (154, 156 ; 254, 256 ; 354, 356) qui s'étend vers l'extérieur depuis l'arête latérale respective du profilé creux, lesdites deux parties saillantes étant disposées décalées les unes par rapport aux autres le long de l'axe longitudinal (L) du profilé creux (142 ; 242 ; 342) et étant formées de manière à pouvoir être amenées en prise par blocage ou par coopération de forme à l'aide d'un élément de verrouillage (344) formé séparément.

3. Montant de cadre selon la revendication 2,
**caractérisé en ce que** lesdites deux parties saillantes (154, 156 ; 254, 256 ; 354, 356) forment conjointement un logement destiné à recevoir l'élément de verrouillage (344).

4. Montant de cadre selon la revendication 3,
**caractérisé en ce que** les parties saillantes (154, 156 ; 254, 256) sont réalisées en forme de fourreaux et disposées de telle manière que des fourreaux formés par les parties saillantes sont pour le moins sensiblement alignés lorsque le profilé creux (142 ; 242) se trouve dans une position fermée.

5. Montant de cadre selon la revendication 2,
**caractérisé en ce que** l'élément de verrouillage présente au moins une rainure de réception qui s'étend dans le sens longitudinal du profilé creux et qui est destinée au logement par blocage ou par coopération de forme d'au moins un tronçon desdites deux parties saillantes.

6. Montant de cadre selon la revendication 5,
**caractérisé en ce que** la rainure de réception présente une contre-dépouille dans laquelle lesdites deux parties saillantes peuvent être amenées en prise par coopération de forme.

7. Montant de cadre selon l'une des revendications 2 à 6,
**caractérisé en ce que** l'élément de verrouillage (344) comporte une tige qui s'étend parallèlement à l'axe longitudinal (L) du profilé creux (342) sur sensiblement toute la longueur du profilé creux.

8. Montant de cadre selon l'une des revendications précédentes,
**caractérisé en ce que** ladite partie saillante (154, 156 ; 254, 256 ; 354, 356), vue en coupe transversale, est au moins en partie pliée ou incurvée.

9. Montant de cadre selon l'une des revendications précédentes,
**caractérisé en ce que** ladite partie saillante (54, 56) présente un contour extérieur sensiblement en forme de T.

10. Montant de cadre selon l'une des revendications précédentes,
**caractérisé en ce que** le profilé creux (42 ; 142 ; 342) présente sur sa surface d'enveloppe un nombre de logements de fixation (50 ; 150 ; 350) formant sensiblement deux ouvertures qui se chevauchent partiellement.
